# Europäisches Patentamt

# European Patent Office

# Office européen des brevets

(11) Veröffentlichungsnummer: **0 130 291**

**B1**

(12) **EUROPÄISCHE PATENTSCHRIFT**

(45) Veröffentlichungstag der Patentschrift:
29.06.88

(21) Anmeldenummer: **84103890.4**

(22) Anmeldetag: **07.04.84**

(51) Int. Cl.⁴: **G 01 F 23/22**

(54) Behälter mit einer Einrichtung zum elektrischen Messen des Niveaus einer in ihm enthaltenen Flüssigkeit.

(30) Priorität: **25.06.83 DE 3322906**

(43) Veröffentlichungstag der Anmeldung:
**09.01.85 Patentblatt 85/2**

(45) Bekanntmachung des Hinweises auf die Patenterteilung:
**29.06.88 Patentblatt 88/26**

(84) Benannte Vertragsstaaten:
**DE FR GB IT NL SE**

(56) Entgegenhaltungen:
**EP-A-0 018 467**
– **CH-A-599 540**
**CH-A-629 301**
**DE-A-3 108 969**
**FR-A-2 223 622**

(73) Patentinhaber: **VDO Adolf Schindling AG,
Gräfstrasse 103, D-6000 Frankfurt/Main (DE)**

(72) Erfinder: **Kant, Bernhard, Berliner Strasse 9, D-6236
Eschborn (DE)**
Erfinder: **Lauth, Hans- Georg, Struthweg 19, D-6384
Schmitten 6 (DE)**

(74) Vertreter: **Könekamp, Herbert, Dipl.- Ing., Sodener
Strasse 9, D-6231 Schwalbach (DE)**

LIBER, STOCKHOLM 1988

**Beschreibung**

Die Erfindung bezieht sich auf einen Behälter mit einer seitlichen Behälterwandung und einem Behälterboden sowie mit einer Einrichtung zum elektrischen Messen des Niveaus einer in ihm enthaltenen Flüssigkeit, welche eine an ihren beiden Oberflächen von der Flüssigkeit umspülbare, bandförmige Leiterfolie, beispielsweise eine elektrisch fremdbeheizte Widerstandsfolie, oder eine aus mindestens zwei Leitern gebildete Kapazitätsfolie enthält, die vom oberen Bereich des Behälters bis zumindest zum Behälterboden reicht.

Aus der DE-A-3 108 969 und der EP-A-18 467 sind derartige Einrichtungen bekannt, die von oben her in den Tank eingesetzt werden, damit keine Dichtungsprobleme durch Behälteröffnungen entstehen. Die Einrichtungen müssen so lang sein, daß sie möglichst bis zum Tankboden reichen, denn bei der Niveaumessung ist die Meßgenauigkeit bei niedrigem Flüssigkeitsniveau meist wichtiger als bei hohem Flüssigkeitsniveau. Leider schwankt der Abstand vom Tankoberteil zum Tankboden beträchtlich, weil bei solchen Tanks die Fertigungstoleranzen groß sind und weil der Tankboden sich durch das Gewicht des Kraftstoffes nach unten beult.

Um dennoch auch im unteren Füllstandsbereich eine ausreichend hohe Meßgenauigkeit zu erzielen, hat man entsprechend der EP-A-18 467 bereits elastische Folienhalter entwickelt, welche federnd gegen den Tankboden anliegen. Solche Konstruktionen sind jedoch recht aufwendig und werden aus Kostengründen selten verwirklicht.

Aus der CH-A5-629 301 ist eine Einrichtung zum elektrischen Messen des Niveaus einer Flüssigkeit bekannt, die eine bandförmige Leiterfolie aufweist, welche auf der Innenwand des Behälters aufgeklebt oder in den Behälter eingelassen ist.

Weiterhin ist aus der CH-A5-599 540 eine derartige Einrichtung bekannt, die einen Widerstandsdraht und einen elektrischen Leiter aufweist, welche an der Innenwand eines Behälters angeordnet sind.

Der Erfindung liegt die Aufgabe zugrunde, einen Behälter mit einer Einrichtung zum elektrischen Messen des Niveaus einer in ihm enthaltenen Flüssigkeit zu entwickeln, bei dem eine sehr genaue Niveaumessung der in ihm enthaltenen Flüssigkeit möglich ist, ohne daß hierzu die Meßeinrichtung kompliziert gestaltet sein muß, jedoch eine große Gestaltungsfreiheit für den Behälter zur Verfügung steht.

Diese Aufgabe wird erfindungsgemäß dadurch gelöst, daß zumindest die seitliche Behälterwandung an der Innenseite des Behälters angeformte Haltemittel zum unmittelbaren oder mittelbaren Haltern der Leiterfolie aufweist oder daß zumindest die seitliche Behälterwandung eine nach außen oder innen gerichtete Behältertasche zum unmittelbaren oder mittelbaren Haltern der Leiterfolie aufweist.

Da die Leiterfolie im Behälter von der Wandung des Behälters gehalten wird, verläuft sie unabhängig von Behältertoleranzen immer bis zur tiefsten Behälterstelle. Auch Behälterverformungen beispielsweise durch Ausbeulen des Behälterbodens infolge des Gewichtes der in ihm enthaltenen Flüssigkeit, beeinflussen die Meßgenauigkeit der Einrichtung nicht, weil die Leiterfolie sich zwangsläufig gemeinsam mit der Behälterwandung verformt. Da Behälter wie zum Beispiel Kraftfahrzeugtanks meist aus Kunststoff gefertigt werden, bereitet die Herstellung der Haltemittel keine Schwierigkeit, sie können vielmehr in einem Arbeitsgang mit dem Behälter erzeugt werden.

Eine konstruktiv sehr einfache Ausführungsform der Erfindung zeichnet sich dadurch aus, daß die Haltemittel durch zwei parallel laufende, nach innen hervorstehende Wandungsrippen gebildet sind, zwischen oder auf denen die Leiterfolie befestigt ist.

Die Leiterfolie wird vorzugsweise mittels Nieten oder Schweißen auf den Wandungsrippen befestigt.

Neben dieser unmittelbaren Befestigung der Leiterfolie ist es jedoch auch möglich, die Folie in einem Folienhalter einzusetzen und den Folienhalter zwischen den Wandungsrippen zu halten, wie das im Anspruch 4 angegeben ist. Bei dieser Ausführungsform wird es möglich, die Leiterfolie außerhalb des Behälters in den Folienhalter einzusetzen und danach den Folienhalter in den Behälter einzubauen, was montagetechnisch vorteilhaft ist.

Günstig ist auch die im Anspruch 5 angegebene Ausführungsform, da bei ihr auf übliche Folienhalter zurückgegriffen werden kann und da Behälter mit solchen Wandungsrippen leicht herstellbar sind.

Günstig ist es auch, wenn der Folienhalter prismatisch ist und an seinen beiden Schmalseiten mit jeweils einem Vorsprung in eine Nut jeder Wandungsrippe gehalten ist. Die Montage eines solchen Folienhalters kann dadurch erfolgen, daß er von oben her in die beiden Wandungsrippen eingeschoben wird. Möglich ist es auch, die Wandungsrippen etwas auseinander zu biegen und dann den Folienhalter von der Stirnseite her zwischen die Wandungsrippen zu schieben, bis er in die beiden Nuten einrastet.

Ein den Folienhalter umschließender Kanal, wie er im Anspruch 7 angegeben ist, ist vor allem dann vorteilhaft, wenn der Behälter ausgeschäumt werden soll, weil dann der Kanal die nachträgliche Montage des Folienhalters nach dem Ausschäumen ermöglicht.

Die Behältertasche kann zum Behälter hin über ihre gesamte Länge einen offenen Spalt haben oder aber verschlossen sein und nur im Bereich des Behälterbodens eine Flüssigkeitsverbindung zum Behälter haben. Letzteres trägt zu einer Dämpfung bei.

Die Behältertasche kann so geformt sein, daß in ihr ein übliches zylindrisches oder ovales Schutzrohr mit der Leiterfolie Platz findet.

Möglich ist es jedoch auch, die Tasche mit zwei einander gegenüberliegenden Führungsnuten auszubilden, in die die Leiterfolie unmittelbar gehalten ist.

Eine alternative Befestigungsart der Leiterfolie besteht darin, diese in einem prismatischen Halter anzuordnen, welcher auf seiner Schmalseite stehend in der Tasche gehalten ist. Dieser Halter kann - wie das im Anspruch 14 angegeben wurde - durch Verschweißen von außen mit der Tasche verbunden sein. Alternativ hierzu kann man die Behältertasche von außen her zusammendrücken und dadurch den Folienhalter in der Folientasche festhalten.

Günstig ist es auch, wenn der Folienhalter eine mit definierten Öffnungen versehene Kammer darstellt, weil dann der Flüssigkeitsspiegel im Folienhalter auch bei Erschütterungen nur geringfügig sich verändert und somit eine Dämpfung eintritt.

Ganz besonders einfach gestaltet sich der Behälter mit der Meßeinrichtung, wenn die Haltemittel an einer oder mehreren stellen der Behälterwandung vorgesehene Laschen oder Ösen sind.

Die Erfindung läßt zahlreiche Ausführungsformen zu. Zu Erläuterung ihres Grundprinzipes sind mehrere davon in der Zeichnung dargestellt und werden nachfolgend beschrieben. Es zeigen:

Figur 1   einen Schnitt durch einen für die Erfindung wesentlichen Teilbereich eines erfindungsgemäßen Behälters in räumlicher Darstellung,

Figur 2   einen Querschnitt durch den Behälter gemäß Figur 1 im Bereich einer Leiterfolie zur Niveaumessung,

Figur 3   einen Querschnitt durch eine zweite Ausführungsform eines Behälters im Bereich einer Leiterfolie zur Niveaumessung,

Figur 4   einen Querschnitt durch eine dritte Ausführungsform eines Behälters im Bereich einer Leiterfolie zur Niveaumessung,

Figur 5   einen Schnitt durch einen für die Erfindung wesentlichen Teilbereich einer weiteren Ausführungsform eines erfindungsgemäßen Behälters in räumlicher Darstellung,

Figur 6   einen Querschnitt durch eine andere Ausführungsform eines Behälters im Bereich seiner Leiterfolie,

Figur 7   einen Schnitt durch einen für die Erfindung wesentlichen Teilbereich eines weiteren erfindungsgemäß gestalteten Behälters in räumlicher Darstellung,

Figur 8   einen Querschnitt durch eine geänderte Behälterausführung im Bereich seiner Leiterfolie.

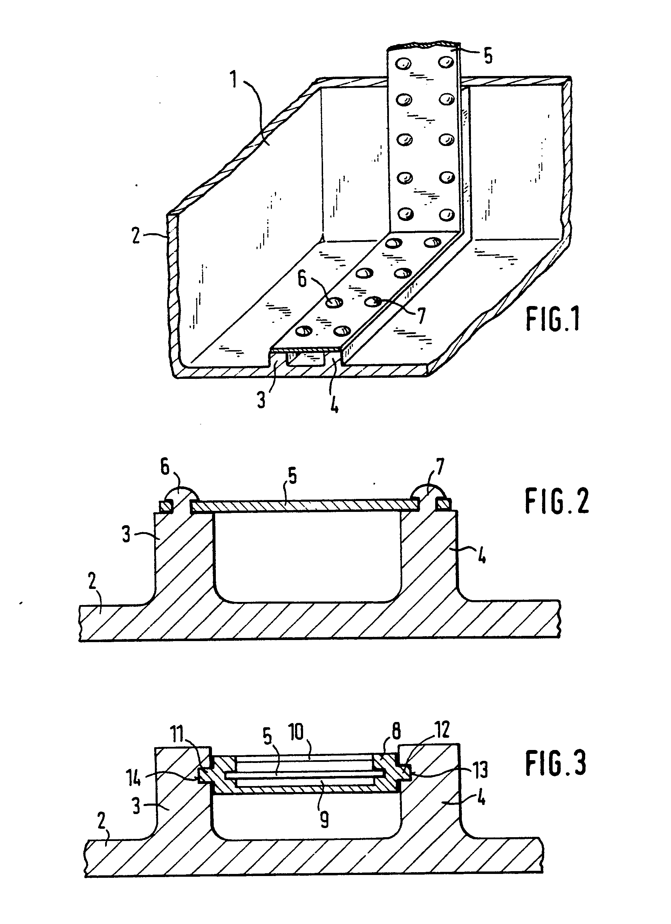

Die Figur 1 zeigt einen wie üblich aus zwei nicht gezeigten Halbschalen hergestellten Behälter 1, dessen Behälterwandung 2 zwei zueinander parallel verlaufende, nach innen gerichtete Wandungsrippen 3, 4 hat. Auf den Wandungsrippen 3, 4 liegt eine Leiterfolie 5, welche - was Figur 2 besonders deutlich zeigt - durch Niete 6, 7 auf den Wandungsrippen 3, 4 gehalten ist. Nicht dargestellt ist, daß die Wandungsrippen 3, 4 mit der Leiterfolie 5 nur bis zur tiefsten Stelle des Behälters 1 führen. Dadurch kann Flüssigkeit von der tiefsten Stelle aus parallel zu den Wandungsrippen 3, 4 in den von den Wandungsrippen 3, 4 und der Leiterfolie 5 begrenzten Raum strömen. Die Leiterfolie 5 ist also von beiden Seiten von Flüssigkeit im Behälter 1 benetzt, so daß eine Niveaumessung möglich wird, wenn man die Leiterfolie 5 auf bekannte Weise mit elektrischer Energie versorgt und mittels einer Auswertschaltung die durch die Flüssigkeit eintretende Widerstandsänderung erfaßt.

Bei der Ausführungsform gemäß Figur 3 ist die Leiterfolie 5 nicht unmittelbar von den Wandungsrippen 3, 4 gehalten, sondern von einem Folienhalter 8, der seinerseits zwischen den Wandungsrippen 3, 4 gehalten ist. Der Folienhalter 8 hat prismatischen Querschnitt und bildet eine Kammer 9, in die Flüssigkeit durch definierte Öffnungen 10 eintreten kann. An ihren beiden Schmalseiten hat der Folienhalter 8 jeweils einen Vorsprung 11, 12 der in eine entsprechende Nut 13, 14 der Wandungsrippen 4, 3 greift, so daß der Folienhalter 8 zwischen den Wandungsrippen 3, 4 gehalten ist. Die Montage des Folienhalters 8 kann von vorne erfolgen, indem die Wandungsrippen 3, 4 auseinandergebogen werden. Möglich ist es natürlich auch, den Folienhalter 8 von oben her in die Nuten 13, 14 einzuschieben.

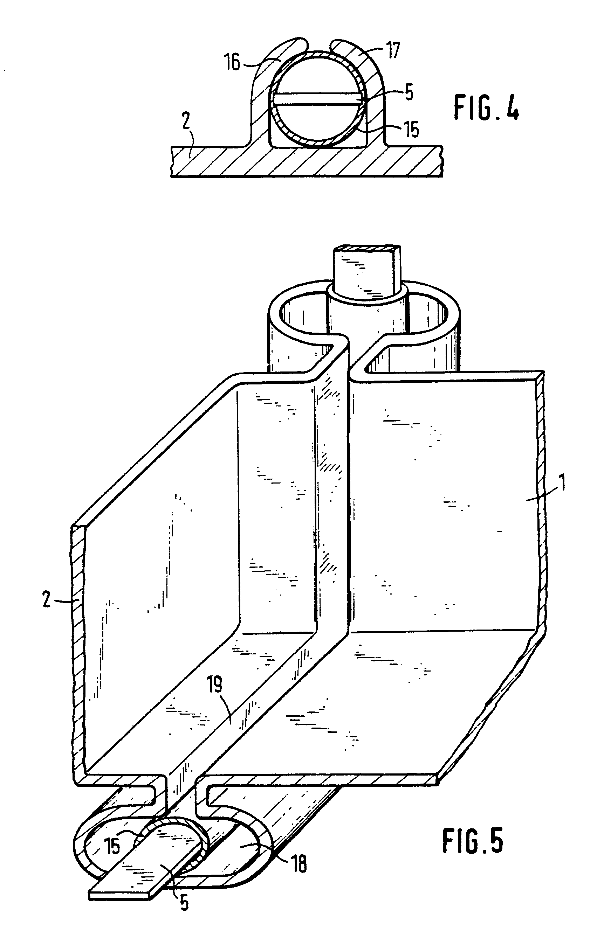

Bei der Ausführungsform gemäß Figur 4 ist ein rohrförmiger Folienhalter 15 vorgesehen, der die Leiterfolie 5 trägt. Dieser Folienhalter 15 ist an der Wandung 2 des Behälters 1 dadurch gehalten, daß Wandungsrippen 16, 17 teilweise über den rohrförmigen Folienhalter 15 greifen. Diese Wandungsrippen 16, 17 brauchen nicht notwendigerweise nur teilweise über den Folienhalter 15 zu greifen, sie können auch zu einem einzigen Bauteil ineinander übergehen und dann den Folienhalter 15 wie eine Rohrschelle umschließen. Die Wandungsrippen 16, 17 können genau wie die Wandungsrippen 3, 4 von oben her bis zur tiefsten Stelle des Behälters 1 verlaufen. Möglich ist es jedoch auch, sie nur an einzelnen Stellen anzuordnen. Man erhält dann einzelne Laschen oder Ösen, die den Folienhalter 15 halten.

Bei der Ausführungsform gemäß Figur 5 hat der Behälter 1 eine nach außen weisende Behältertasche 18, in die wiederum ein rohrförmiger Folienhalter 15 mit der Leiterfolie 5 angeordnet ist. Die Behältertasche 18 ist über ihre gesamte Länge zum Behälter 1 hin über einen Spalt 19 offen. Die Behältertasche 18 kann jedoch auch geschlossen sein, indem die Behälterwandung 2 sich im Bereich des Spaltes 19 berührt. Möglich ist es auch, die Behältertasche 18 von außen zusammenzudrücken und dadurch den Folienhalter 15 in der Behältertasche 18 festzuhalten. Auch bei einer Ausführungsform ohne Spalt 19 ist es natürlich genau wie bei der gemäß Figur 1 notwendig, daß Flüssigkeit aus dem Behälter 1 in die Behältertasche 18 gelangen kann, was durch einen nicht gezeigten Flüssigkeitseinlauf an der tiefsten Stelle möglich ist.

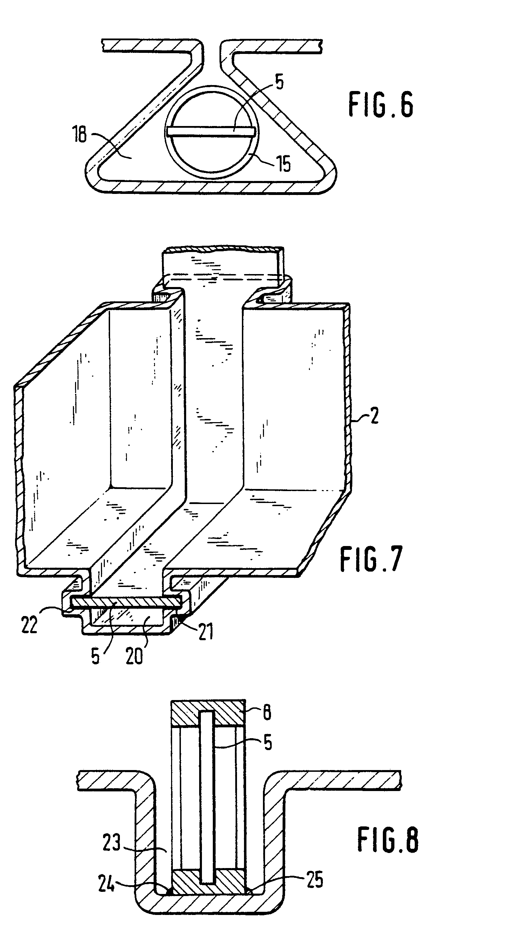

Die Figur 6 zeigt, daß die Behältertasche 18 im Querschnitt nicht notwendigerweise oval sein muß, sondern auch die Form eines Dreiecks haben kann. In dieser dreieckigen Behältertasche 18 ist genau wie zuvor beschrieben ein rohrförmiger Folienhalter 15 mit einer Leiterfolie 5 angeordnet.

Bei der Ausführungsform gemäß Figur 7 ist die Leiterfolie 5 unmittelbar in einer Behältertasche 20 eingesetzt. Hierzu ist die Behälterwandung 2 im Bereich der Behältertasche 20 so geformt, daß zwei einander gegenüberliegende, parallel laufende Führungsnuten 21, 22 entstehen, in die die Leiterfolie 5 mit ihren beiden Längsseiten eingreift, so daß sie auf diese Weise gehalten ist.

Bei der Ausführungsform gemäß Figur 8 ist eine Behältertasche 23 so groß ausgebildet, daß der Folienhalter 8 auf seiner Schmalseite stehend in dieser Behältertasche 23 Platz findet. Durch Schweißpunkte 24, 25 kann von außen her der Folienhalter 8 in der Behältertasche 23 gehalten sein.

**Patentansprüche**

1. Behälter mit einer seitlichen Behälterwandung und einem Behälterboden sowie mit einer Einrichtung zum elektrischen Messen des Niveaus einer in ihm enthaltenen Flüssigkeit, welche eine an ihren beiden Oberflächen von der Flüssigkeit umspülbare, bandförmige Leiterfolie, beispielsweise eine elektrisch fremdbeheizte Widerstandsfolie oder eine aus mindestens zwei Leitern gebildete Kapazitätsfolie enthält, die im oberen Bereich des Behälters bis zumindest zum Behälterboden reicht, dadurch gekennzeichnet, daß zumindest die seitliche Behälterwandung (2) an der Innenseite des Behälters (1) angeformte Haltemittel (3, 4) zum unmittelbaren oder mittelbaren Haltern der Leiterfolie aufweist oder daß zumindest die seitliche Behälterwandung (2) eine nach außen oder innen gerichtete Behältertasche (18, 19, 20) zum unmittelbaren oder mittelbaren Haltern der Leiterfolie (5) aufweist.

2. Behälter nach Anspruch 1, dadurch gekennzeichnet, daß die Haltemittel durch zwei parallel laufende, nach innen hervorstehende Wandungsrippen (3, 4) gebildet sind, zwischen oder auf denen die Leiterfolie (5) befestigt ist.

3. Behälter nach Anspruch 2, dadurch gekennzeichnet, daß die Leiterfolie (5) mittels Nieten (6, 7) auf den Wandungsrippen (3, 4) befestigt ist.

4. Behälter nach Anspruch 2, dadurch gekennzeichnet, daß die Leiterfolie (5) in einem die Folie allseitig umschließenden mit Flut- und Entlüftungskanälen vorgesehenen Folienhalter (8) eingesetzt und der Folienhalter (8) zwischen den Wandungsrippen (3, 4) gehalten ist.

5. Behälter nach Anspruch 4, dadurch gekennzeichnet, daß der Folienhalter, (15) rohrförmig ist und die Wandungsrippen (16, 17) den Folienhalter (15) außenseitig teilweise umgreifen.

6. Behälter nach Anspruch 4, dadurch gekennzeichnet, daß der Folienhalter (8) prismatisch ist und an seinen Schmalseiten mit jeweils einem Vorsprung (11, 12) in eine Nut (13, 14) jeder Wandungsrippe (3, 4) gehalten ist.

7. Behälter nach Anspruch 1, dadurch gekennzeichnet, daß die Leiterfolie (5) in einem die Folie allseitig umschließenden, mit Flut- und Entlüftungskanälen vorgesehenen Folienhalter eingesetzt ist und der Folienhalter (15) rohrförmig und das Haltemittel als den Folienhalter umschließender Kanal ausgebildet ist.

8. Behälter nach Anspruch 1, dadurch gekennzeichnet, daß die Behältertasche (18, 19) zum Behälter (1) hin über ihre gesamte Länge einen offenen Spalt (19) hat.

9. Behälter nach Anspruch 1, dadurch gekennzeichnet, daß die Behältertasche (18, 19) zum Behälter hin im wesentlichen verschlossen ist und nur im Bereich des Behälterbodens eine Flüssigkeitsverbindung zum Behälter (1) hat.

10. Behälter nach Anspruch 1 oder einem der folgenden, dadurch gekennzeichnet, daß in der Behältertasche (18, 19) ein die Leiterfolie (5) enthaltendes zylindrisches Schutzrohr (15) angeordnet ist.

17. Behälter nach einem der Ansprüche 8 bis 10, dadurch gekennzeichnet, daß in der Behältertasche (20) zwei einander gegenüberliegende Führungsnuten (21, 22) vorgesehen sind, in denen die Leiterfolie (5) unmittelbar gehalten ist.

12. Behälter nach Anspruch 1, dadurch gekennzeichnet, daß die Leiterfolie (5) in einem prismatischen Folienhalter (8) angeordnet ist, welcher auf seiner Schmalseite stehend in der Behältertasche (23) gehalten ist.

13. Behälter nach Anspruch 12, dadurch gekennzeichnet, daß der Folienhalter (8) durch Verschweißen von außen her mit der Behältertasche (23) verbunden ist.

14. Behälter nach Anspruch 12, dadurch gekennzeichnet, daß der Folienhalter (15, 8) durch Zusammendrücken der Behältertasche (18, 23) von außen im Behälter (1) gehalten ist.

15. Behälter nach einem der Ansprüche 12 bis 15, dadurch gekennzeichnet, daß der Folienhalter (8) eine mit definierten Öffnungen (10) versehene Kammer darstellt.

16. Behälter nach Anspruch 1, dadurch gekennzeichnet, daß die Haltemittel an einer Stelle oder an mehreren Stellen der Behälterwandung (2) vorgesehene Laschen oder Ösen sind.

## Claims

1. Container with a lateral container wall and a container bottom and with a device for electrically measuring the level of a liquid contained in it, the said device containing a strip-shaped conductor foil round which the liquid can circulate on its two surfaces, for example a resistance foil externally heated electrically or a capacitance foil formed from at least two conductors, which extends in the upper region of the container at least up to the container bottom, characterized in that at least the lateral container wall (2) has retaining means (3, 4) formed on the inner face of the container (1) and intended for the direct or indirect retention of the conductor foil, or in that at least the lateral container wall (2) has an outwardly or inwardly directed container pocket (18, 19, 20) for the direct or indirect retention of the conductor foil (5).

2. Container according to Claim 1, characterized in that the retaining means are formed by two parallel wall ribs (3, 4) which project inwards and between or on which the conductor foil (5) is fastened.

3. Container according to Claim 2, characterized in that the conductor foil (5) is fastened to the wall ribs (3, 4) by means of rivets (6, 7).

4. Container according to Claim 2, characterized in that the container conductor foil (5) is inserted in a foil-holder (8) surrounding the foil on all sides and provided with flood and vent channels, and the foil-holder (8) is retained between the wall ribs (3, 4).

5. Container according to Claim 4, characterized in that the foil-holder (15) is tubular, and the wall ribs (16, 17) surround the foil-holder (15) partially on the outside.

6. Container according to Claim 4, characterized in that the foil-holder (8) is prism-shaped and is retained on each of its narrow sides by means of a projection (11, 12) in a groove (13, 14) in each wall rib (3, 4).

7. Container according to Claim 1, characterized in that the conductor foil (5) is inserted in a foil-holder surrounding the foil on all sides and provided with flood and vent channels, the foil-holder (15) is tubular and the retaining means is designed as a channel surrounding the foil-holder.

8. Container according to Claim 1, characterized in that the container pocket (18, 19) has a gap (19) open towards the container (1) over its entire length.

9. Container according to Claim 1, characterized in that the container pocket (18, 19) is essentially closed relative to the container and is in liquid communication with the container (1) in the region of the container bottom only.

10. Container according to Claim 1 and one of the following claims, characterized in that a cylindrical protective tube (15) containing the conductor foil (5) is arranged in the container pocket (18, 19).

11. Container according to one of Claims 8 to 10, characterized in that two mutually opposing guide grooves (21, 22), in which the conductor foil (5) is retained directly, are provided in the container pocket (20).

12. Container according to Claim 1, characterized in that the conductor foil (5) is arranged in a prism-shaped foil-holder (8) which is retained, standing on its narrow side, in the container pocket (23).

13. Container according to Claim 12, characterized in that the foil-holder (8) is connected to the container pocket (23) by being welded to it from the outside.

14. Container according to Claim 12, characterized in that the foil-holder (15, 8) is retained in the container (1) from outside as a result of the compression of the container pocket (18, 23).

15.. Container according to one of Claims 12 to 15, characterized in that the foil-holder (8) forms a chamber which has specific orifices (10).

16. Container according to Claim 1, characterized in that the retaining means are shackles or lugs provided at one point or at several points on the container wall (2).

## Revendications

1. Récipient comportant une paroi latérale et un fond, ainsi qu'un dispositif, destiné a mesurer par voie électrique le niveau d'un liquide qui est contenu dans ce récipient et comprenant une feuille métallique conductrice en forme de bande, qui peut être baignée par ce liquide sur ses deux faces, par exemple une feuille résistante chauffée électriquement par une source étrangère ou une feuille capacitive formée d'au moins deux conducteurs, et qui va de la partie supérieure du récipient jusqu'à son fond au moins, récipient caractérisé en ce que la paroi latérale (2) au moins comporte des éléments (3, 4) de maintien, formés sur le côté intérieur du récipient (1) et destinés à maintenir directement ou indirectement la feuille conductrice, ou en ce que cette paroi latérale (2) au moins comporte une poche (18, 19, 20) orientée vers l'extérieur ou vers l'intérieur et destinée à maintenir directement ou indirectement la feuille conductrice (5).

2. Récipient selon la revendication 1, caractérisé en ce que les éléments de maintien sont formés par deux nervures (3, 4) parallèles de la paroi faisant saillie vers l'intérieur, entre ou sur lesquelles la feuille conductrice (5) est fixée.

3. Récipient selon la revendication 2, caractérisé en ce que la feuille conductrice (5) est fixée au moyen de rivets (6, 7) sur les nervures (3, 4) de la paroi.

4. Récipient selon la revendication 2, caractérisé en ce que la feuille conductrice (5) est placée dans un support (8) qui l'entoure de tous côtés et comporte des canaux de remplissage et d'échappement d'air, et en ce que ce support (8) est maintenu entre les nervures (3, 4) de la paroi.

5. Récipient selon la revendication 4, caractérisé en ce que le support (15) de feuille est tubulaire et les nervures (16, 17) de la paroi (2) le recouvrent partiellement à l'extérieur.

6. Récipient selon la revendication 4, caractérisé en ce que le support (8) de feuille est prismatique et, sur chacun de ses petits côtés, il est retenu par une partie saillante (11, 12) dans une rainure (13, 14) de la nervure (3, 4) respective.

7. Récipient selon la revendication 1, caractérisé en ce que la feuille conductrice (5) est placée dans un support qui l'entoure de tous côtés et qui comporte des canaux de remplissage et d'échappement d'air, ce support (15) est tubulaire et les éléments de maintien sont agencés sous la forme d'un canal entourant ledit support.

8. Récipient selon la revendication 1, caractérisé en ce que la poche (18, 19) du récipient, a, sur toute sa longueur, un interstice (19) dégagé, débouchant dans ce récipient (1).

9. Récipient selon la revendication 1, caractérisé en ce que la poche (18, 19) de ce récipient est sensiblement fermée vers ledit récipient et ne comporte que près du fond de ce dernier un passage permettant au liquide de communiquer avec le récipient (1).

10. Récipient selon la revendication 1 ou l'une des suivantes, caractérisé en ce qu'un tube protecteur (15) cylindrique, contenant la feuille conductrice (5), est disposé dans la poche (18, 19) du récipient.

11. Récipient selon l'une des revendications 8 a 10, caractérisé en ce que deux rainures (21, 22) de guidage opposées, dans lesquelles la feuille conductrice (5) est maintenue directement, sont formées dans la poche (20) du récipient.

12. Récipient selon la revendication 1, caractérisé en ce que la feuille conductrice (5) est disposée dans un support (8) prismatique qui est maintenu, posé débout sur son petit côté, dans la poche (23) du récipient.

13. Récipient selon la revendication 12, caractérisé en ce que le support (8) de la feuille est relié à la poche (23) du récipient par soudure à l'extérieur.

14. Récipient selon la revendication 12, caractérisé en ce que le support (8, 15) de feuille est maintenu dans le récipient (1) par compression depuis l'extérieur de la poche (18, 23) de ce récipient.

15. Récipient selon l'une des revendications 12 à 14, caractérisé en ce que le support (8) de feuille constitue une chambre à ouvertures (10) calibrées.

16. Récipient selon la revendication 1, caractérisé en ce que les éléments de maintien sont des cavaliers ou des colliers disposés en un ou plusieurs endroits de la paroi (2) du récipient.

FIG.1

FIG.2

FIG.3

FIG.4

FIG.5

FIG.6

18  5  15

FIG.7

2

22  5  20  21

FIG.8

8
5

23
24  25